Europäisches Patentamt

European Patent Office

Office européen des brevets

(11) Publication number: **0 044 431**
**B1**

## (12) EUROPEAN PATENT SPECIFICATION

(45) Date of publication of patent specification: **22.10.86**

(21) Application number: **81104858.6**

(22) Date of filing: **23.06.81**

(51) Int. Cl.⁴: **G 01 K 7/38, G 01 K 3/00**

(54) Apparatus for detecting the local temperature variations of an object and the sites of the temperature variations.

(30) Priority: **23.06.80 JP 84902/80**
**23.06.80 JP 84905/80**
**18.09.80 JP 129460/80**
**26.09.80 JP 132843/80**

(43) Date of publication of application:
**27.01.82 Bulletin 82/04**

(45) Publication of the grant of the patent:
**22.10.86 Bulletin 86/43**

(84) Designated Contracting States:
**DE FR GB SE**

(56) References cited:
**FR-A-2 292 962**
**US-A-2 615 973**
**US-A-2 926 343**
**US-A-3 413 540**

(73) Proprietor: **Kabushiki Kaisha Toshiba**
**72, Horikawa-cho Saiwai-ku**
**Kawasaki-shi Kanagawa-ken 210 (JP)**

(72) Inventor: **Wakahara, Yasushi**
**516-15, Kishine-cho**
**Kohoku-ku Yokohama-shi (JP)**
Inventor: **Sato, Hirokazu**
**11, Takami-so 1-73, Tote-honcho**
**Saiwai-ku Kawasaki-shi (JP)**

(74) Representative: **Henkel, Feiler, Hänzel & Partner**
**Möhlstrasse 37**
**D-8000 München 80 (DE)**

## Description

The present invention relates to an apparatus for detecting local temperature variation of an object and the site of the temperature variation, comprising a temperature-sensing member including an elongate conductor constituting a signal transmission circuit and an elongate magnetic element having a prescribed Curie temperature corresponding to the lower limit of an anticipated abnormal temperature range, a pulse generator for supplying a pulse signal to one end of said temperature-sensing member, a pulse time difference detector for detecting a time difference between a point of time at which the pulse signal from said pulse generator is received at said one end of said temperature-sensing member and a point of time at which the pulse signal reflected from a site of said temperature-sensing member where the characteristic impedance of said temperature-sensing member has changed due to an increase in temperature above the Curie temperature is received at said one end of said temperature-sensing member, a temperature variation site detector responsive to said time difference detector the site of the impedance change from the detected time difference, and insulating means for insulating said elongate conductor and said elongate magnetic element.

Recently, an apparatus for detecting local temperature variations of an object and the sites of the temperature variations (hereinafter referred to as "a temperature variation-site detecting apparatus") has been developed which detects abnormal temperatures occurring, for example in an elongate pipe on a tank or leakage of a hot or cold liquid and the sites of all these accidents by utilizing changes with time in the characteristic impedance of a temperature variation-detecting cable comprising a magnetic material disposed between a pair of conductors.

FR—A—2 292 962 (=US—A—4 023 412) sets forth the above-mentioned type of temperature variation-site detecting apparatus comprising a temperature sensing element using a ferromagnetic material. This ferromagnetic material is inserted between the two conductors, the ferromagnetic material and the two conductors extending parallely to each other. The ferromagnetic material consists of powdered soft ferrite material.

However, a cable having such configuration with the two conductors and the powdered soft ferrite material therebetween is susceptible to mechanical pressure, and more particularly, a cable with a powdered soft ferrite material is mechanically weak.

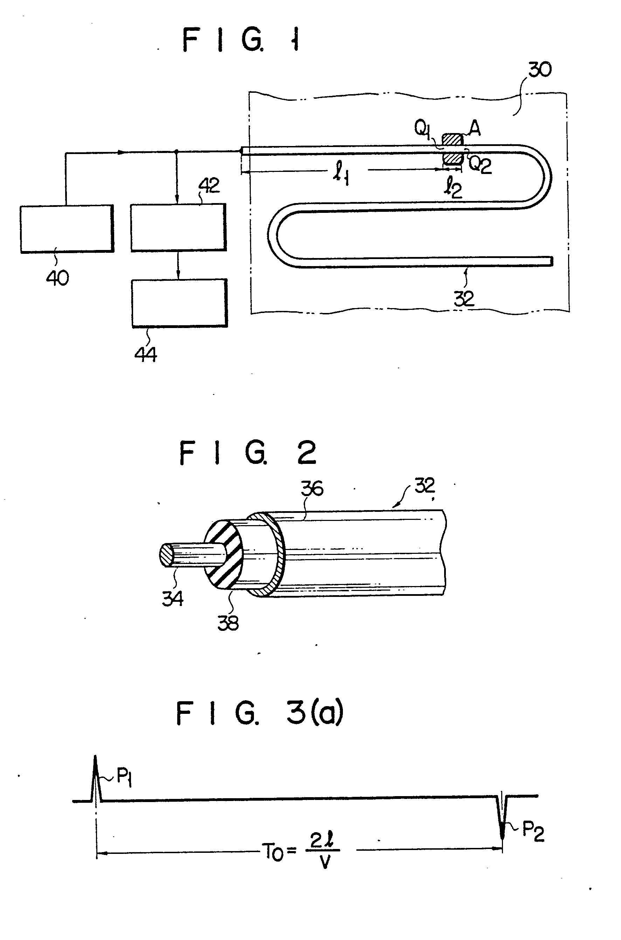

Fig. 1 is a schematic diagram of an example of a similar prior art temperature variation-site detecting apparatus. A temperature variation-detecting cable 32 is mounted on part of the outer peripheral wall of an object 30, for example, a tank. The cable 32 is, as shown in Fig. 2, of the concentric type which comprises a linear core conductor 34, outer hollow cylindrical conductor 36 surrounding the core conductor 34 and a magnetic material 38 which has a relatively low Curie temperature and is filled between the outer conductor 36 and the core conductor 34. The magnetic material 38 is formed by mixing ferrite powder with, for example, an insulating adhesive. This magnetic material 38 is chosen to have such a Curie temperature as is set at the upper or lower limit of a temperature range regarded as, for example, an abnormal level.

The starting end of the cable 32 is connected to a pulse generator 40 and a pulse time difference detector 42. The terminal end of the cable 32 is short-circuited or may be left open. Upon receipt of a set signal, the pulse generator 40 sends forth a short width pulse signal to the starting end of the cable 32. The pulse time difference detector 42 counts a difference between a point of time at which the output pulse signal is received and a point of time at which the pulse signal is reflected from the prescribed spot of the cable 32. A signal denoting the time difference is conducted to a detector 44 for indicating a site at which temperature variations take place (hereinafter referred to as "a temperature variation site detector"). This temperature variation site detector 44 determines the occurence or absence of abnormal temperature and the site of the abnormal temperature from the above-mentioned time difference thus detected.

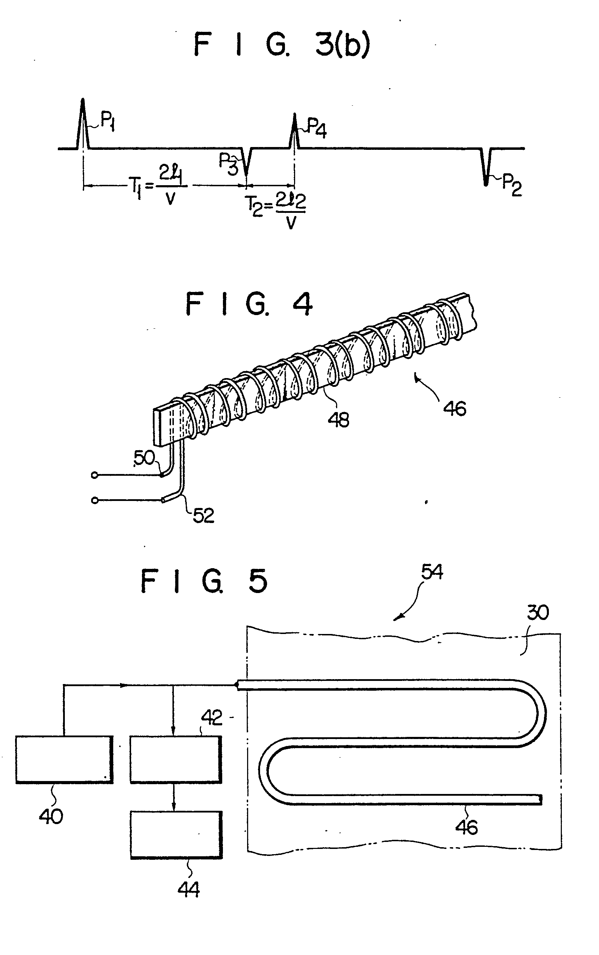

A pulse signal emitted from the pulse generator 40 is supplied to the starting end of the cable 32, and then conducted through the cable 32. Where, at this time, a substantially fixed temperature prevails over the whole of the object 30, then the impedance of the cable 32 also remains fixed over the whole of the object 30. Therefore, the output pulse signal is reflected only at the terminal end of the cable 32. At this time, the pulse time difference detector 42 counts a difference $T_0(T_0 = 2 l/v)$ (Fig. 3(a)) between the point of time at which an output pulse signal $P_1$ is received and the point of time at which a reflected pulse signal $P_2$ is received at the terminal end of the cable 32. The character l denotes the total length of the cable 32, and the character v represents the speed at which a pulse signal is transmitted through the cable. Where a time difference $T_0$, for example, is detected, then the temperature variation site detector 44 judges that the object 30 has no abnormal temperature variations.

Where the temperature of the portion of the cable 32 near a given point A on the object 30 at which an abnormally high temperature occurs increases over the Curie temperature of the magnetic material 38, then the relative permeability of the magnetic material 38 substantially stands at 1. As a result, the impedance of the cable 32 at a point $Q_1$ near the aforementioned point A falls, causing the above-mentioned pulse signal to be reflected at the point $Q_1$. At this time, the pulse time difference detector 42 counts a difference $T_1(T_1 = 2l_1/v)$ (Fig. 3(b)) between a point of time at which the output pulse signal $P_1$ is received and a point of time at which a pulse signal $P_3$ is reflected at the point $Q_1$. The character $l_1$ is a distance from the starting end of the cable 32 to the point $Q_1$. Where the aforementioned abnormal temperature site A covers an area defined by a prescribed distance $l_2$, then the pulse time difference detector 42 also counts a difference $T_2(T_2=2l_2/v)$ between a point of time at which the pulse $P_3$ is reflected at the point $Q_1$ of the abnormal temperature site A and a point of time at which a pulse $P_4$ is reflected at a point $Q_2$. Where the time differences $T_1,T_2(T_1<T_0, T_2<T_0)$ are detected, then the temperature variation site detector 44 judges that an abnormal temperature arises in the object 30, and determines the site and range of the abnormal temperature.

The aforementioned prior art temperature variation-site detecting apparatus indeed has the advantages that it is possible to easily detect the occurrence of abnormal temperatures in an object, for example, a tank, and the sites of the abnormal temperatures; and sites of abnormal temperatures can be detected over a broad area of the object 30, thereby making it possible to easily determine sites of abnormal temperatures even in a large object.

Nevertheless, the above-mentioned temperature variation-site detecting apparatus is accompanied with the following drawbacks. The cable 32 is constructed by uniformly filling a magnatic material 38 in a space defined between the core conductor 34 and outer hollow cylindrical conductor 36. In this case, the conventional process comprises mixing ferrite powder· with an adhesive, and filling the mixture between the conductors 34, 36 or applying ferrite powder on the outer peripheral wall of the core conductor 34 by means of a rubber type adhesive. Consequently this conventional apparatus has the drawbacks that a time-consuming process is involved of previously crushing ferrite into powder and then uniformly mixing the powder with the adhesive, thus undesirably leading to an increase in the cost of producing the cable 34 and consequently a temperature variation-site detecting apparatus.

Further the ferrite powder contained in the magnetic material 38 rather tends to give rise to the formation of a diamagnetic field, reducing the permeability of the magnetic member 38. Therefore, a decline appears in the changes of the inductance of the cable 32 resulting from temperature variations near the prescribed Curie temperature of the magnetic material 38, and consequently in the sensitivity with which the temperature variation-site detecting apparatus detects temperature variations.

It is accordingly the object of this invention to provide an apparatus for detecting the local temperature variations of an object, and the sites of the temperature variation, the apparatus being provided with a temperature-sensing element capable of being easily manufactured and detecting temperature with an elevated sensitivity.

To attain the above-mentioned object, this invention provides an apparatus for detecting the local temperature variation of an object and the site of the temperature variation which comprises the features as defined in the pre-characterizing part of the claim 1 and which is characterized in that said magnetic element is formed of a band-shaped amorphous magnetic alloy mainly consisting of a ferromagnetic transition metal. Preferred embodiments of the invention are defined in the subclaims 2 to 7.

The apparatus of this invention for detecting the local temperature variations of an object and the sites of the temperature variations which is arranged as described above has the following advantages:

(1) It is possible to reduce the cost of a cable element for detecting the local temperature variations of an object;

(2) Since a diamagnetic field produced in a magnetic material is weak, the temperature variation-site detecting apparatus has an elevated detection sensitivity;

(3) A magnetic material is saved from variations in relative permeability which have hitherto occurred due to the distribution of, for example, ferrite powder. Therefore, the Curie temperature of a temperature-sensing element can be easily predetermined.

(4) The distribution of a magnetic material is little likely to change during the application of the subject temperature variation-site detecting apparatus. Therefore, the apparatus can sustain a reliable detection capacity over a long period of time:

(5) If the band-shaped magnetic member is formed of amorphous magnetic material having a higher relative permeability than ferrite, then the subject temperature variation-site detection apparatus is improved in detecting sensitivity; and

(6) If the band-shaped magnetic material is made to concurrently act as a pulse transmission conductor for a temperature-sensing element, then the element is simplified in arrangement.

Other features and advantages of the invention will be apparent from the following description taken in connection with the accompanying drawings wherein:

Fig. 1 schematically shows a prior art temperature variation-site detecting apparatus;

Fig. 2 is an oblique view of a conventional temperature-sensing element;

Figs. 3(a) and 3(b) are signal waveform diagrams respectively showing the relation of a pulse signal and the reflection;

Fig. 4 is an oblique view of a temperature-sensing element according to one embodiment of this invention;

Fig. 5 schematically illustrates a temperature variation-site detecting apparatus using the temperature-sensing element of Fig. 4;

Figs. 6 to 14 show temperature-sensing elements according to the other embodiments of the invention;

Figs. 15 and 16 are the cross sectional views of temperature-sensing elements according to still other embodiments of the invention;

Figs. 17 to 19 are oblique views of temperature-sensing elements according to further embodiments of the invention;

Fig. 20 graphically shows the relationship between the temperature and relative permeability of a certain magnetic material embodying the invention;

Fig. 21 schematically indicates a temperature variation-site detecting apparatus arranged in a different manner from that of Fig. 5 by applying any of the temperature-detecting elements of Figs. 4 to 19 embodying the invention;

Fig. 22 graphically sets forth the relationship between the temperature and relative permeability of two kinds of magnetic material used with the temperature variation-site detecting apparatus arranged as shown in Fig. 21;

Figs. 23(a) to 23(e) are time charts showing the operation of the temperature variation-site detecting apparatus of Fig. 21.

Fig. 4 shows a cable type temperature-sensing element 46 according to one embodiment of this invention. This temperature-sensing element 46 comprises a band-shaped amorphous magnetic material 48 having a Curie temperature coresponding to the lower limit of an anticipated abnormal temperature range and two coiled conductors 50, 52 coated with an insulation layer and wound about the band-shaped amorphous magnetic material 48. As used with this invention, the amorphous magnetic material 48 is an alloy which mainly consists of a ferromagnetic transition metal such as iron, cobalt or nickel and has a prominently higher relative permeability than ferrite powder. The amorphous magnetic material 48 has a width of, for example, 2 mm and a thickness of, for example, 20 microns and is rendered flexible. If necessary, a rare earth element, molybdenum, niobium, chromium, manganese, silicon, boron or phosphorous is added to the magnetic material 48. The temperature-sensing element 46 is, for example, mounted on an object 30 as shown in Fig. 5. The starting end of the temperature-sensing element 46 is connected to a pulse generator 40 and pulse time difference detector 42. An output signal from the pulse time difference detector 42 is supplied to the temperature variation site detector 44 of a temperature variation-site detecting apparatus 54.

With the temperature-sensing element 46 constructed as shown in Fig 4, the band-shaped magnetic material 48 has the same function as the magnetic material 38 of the prior art temperature sensing element 32 of Fig. 2, and determines temperature variations and the sites of the temperature variations. The band-shaped magnetic material 48 can be easily produced at low cost. The temperature-sensing element 46 is manufactured simply by winding two insulation layer coated-conductors 50, 52 around the band-shaped magnetic material 48 at a lower cost than the prior art temperature-sensing element 32, thereby making it possible to manufacture a temperature variation-site detecting apparatus 54 at reuced cost.

A diamagnetic field formed in the band-shaped amorphous magnetic material 48 is weak, thereby assuring a relative permeability as high as 100 to 1000 times than that of the prior art magnetic material formed of ferrite powder. Since the band-shaped magnetic material 48 is wound with two conductors 50, 52, the tmperature-sensing element 46 has more increased inductance. Therefore, for more noticeable variations than in the conventional ferrite powder type temperature-sensing element 32 take place in the inductance of the band-shaped magnetic material 48 in the proximity of its Curie temperature, that is, the characteristic impedance of the temperature-sensing element 46. As a result, a pulse signal reflected from a site having an abnormal temperature has a higher level or intensity, thereby prominently elevating the detection sensitivity of the temperature variation-site detecting apparatus 54.

The Curie temperature of the amorphous magnetic material 48 can be selected over a considerably broad range depending on the material chosen. Accordingly, the magnetic material 48 offers the advantage that the upper and lower limit of an anticipated abnormal temperature range can be freely predetermined.

The amorphous magnetic material 48 is formed of a band-shaped alloy whose permeability is uniformly distributed throughout the temperature sensing element 46, thereby preventing pulse signals reflected from various sites of the temperature-sensing element 46 from being unbalanced in intensity, and consequently elevating the efficiency of the temperature-sensing element 46.

With the amorphous magnetic material 48 having a strong alloyed structure, atoms constituting the magnetic material 48 little tend to present rearrangement during the application of the amgnetic material 48, thereby reducing the possibility of the relative permeability of the temperature-sensing element 46 being changed during its application.

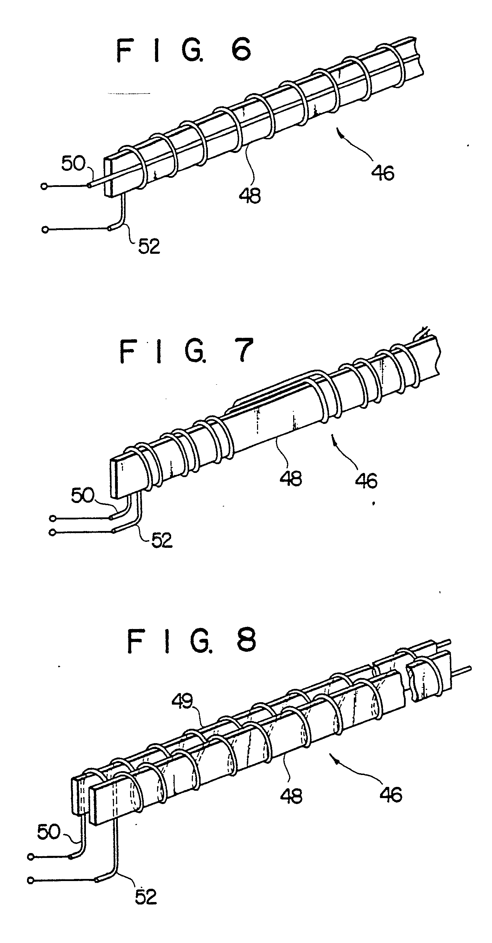

Fig. 6 shows a temperature-sensing element 46 according to a second embodiment of the invention. This temperature-sensing element 46 also comprises a band-shaped magnetic material 48 having a prescribed Curie temperature and two conductors 50, 52. In the second embodiment, however, one conductor 52 is wound about the band-shaped magnetic material 48 from end to end, whereas the other conductor 50 extends along one lateral side of the band-shaped magnetic material 48. The temperature-sensing element 46 according to the second embodiment still has the same effect as that of the first embodiment.

Fig. 7 indicates a temperature-sensing element 46 according to a third embodiment of the invention. The parts the same as those of Figs. 4 and 5 are denoted by the same numerals, decription thereof being omitted. The temperature-sensing element 46 according to the third embodiment comprises a band-shaped magnetic material 48 and two conductors 50, 52 which are wound about the band-shaped magnetic member 48 along its axis at a predetermined interval in a prescribed number of turns for each interval.

Fig. 8 sets forth a temperature-sensing element 46 according to a fourth embodiment of this invention, which is constructed by winding two conductors 50, 52 respectively about two parallel extending band-shaped magnetic materials 48, 49.

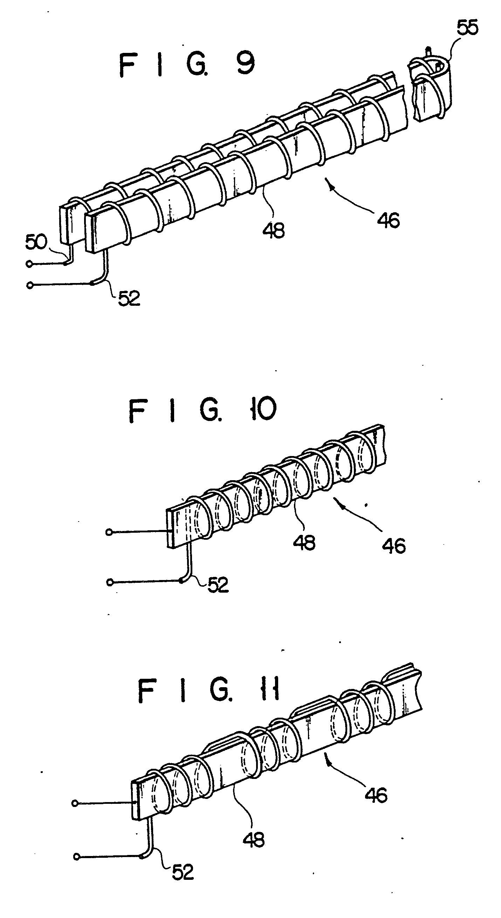

Fig. 9 illustrates a temperature-sensing element 46 according to a fifth embodiment of this invention, which is constructed by winding two conductors 50, 52 respectively about two parallel extending arms of a U-shaped magnetic material 48 bent at the center 55.

Fig. 10 indicates a temperature-sensing element 46 according to a sixth embodiment of this invention, which is constructed by winding a conductor 52 coated with an insulation layer about a band-shaped amorphous magnetic material. The band-shaped magnetic material 48 constitutes a pulse signal-transmitting circuit. The conductive amorphous magnetic material 48 which concurrently acts as a conductor and magnet simplifies the construction of the temperature-sensing element 46.

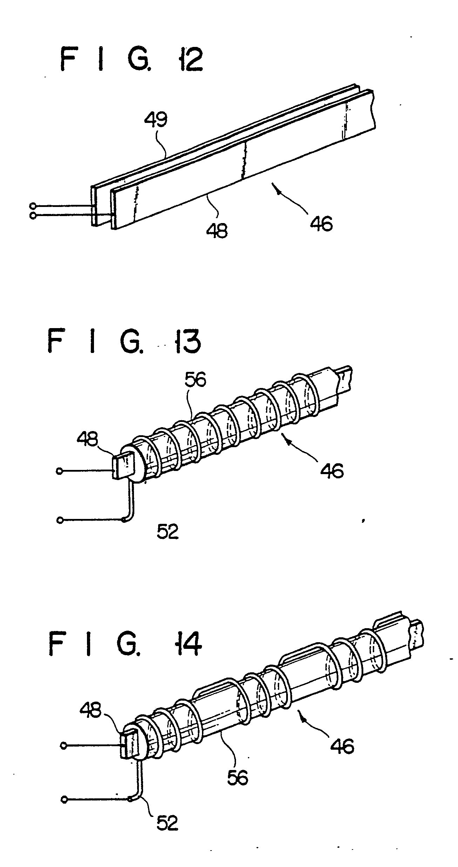

Fig. 11 shows a temperature-sensing element 46 according to a seventh embodiment of this invention, which is constructed by winding a conductor 52 about a band-shaped magnetic material 48 constituting a pulse signal-transmitting circuit along the axis of the magnetic material 48 at a predetermined interval in a prescribed number of turns for each interval. Obviously, the temperature-sensing element 46 of Fig. 11 still has the same efficiency as the preceding embodiments.

Fig. 12 illustrates a temperature-sensing element 46 according to an eighth embodiment of this invention, which is formed of two band-shaped amorphous magnetic materials 48, 49 arranged in parallel at a prescribed interval to jointly constitute a pulse signal-transmitting circuit.

Fig. 13 shows an improved temperature-sensing element 46 according to a ninth embodiment of this invention, which comprises a band-shaped amorphous magnetic material 48 having a prescribed Curie temperature, insulation layer 56 prepared from, for example, polyethylene to cover the magnetic material 48 and conductor 52 wound about the insulation layer 56. The band shaped conductive amorphous magnetic material 48 acts as a pulse signal-transmitting circuit. The magnetic material 48 concurrently acting as a conductor and magnet simplifies the construction of the temperature-sensing element 46. The insulation layer 56 should preferably be prepared from a material which does not melt at a lower temperature than the Curie temperature of the magnetic material 48, for example, Teflon, nylon, polyvinyl chloride, polyurethane or polyethylene.

Fig. 14 sets forth a temperature-sensing element 46 according to a tenth embodiment of this invention, which comprises a band-shaped magnetic material 48, insulation layer 56 coated thereon, and conductor 52 wound about the insulation layer 56 along its axis at a prescribed interval in a predetermined number of turns for each interval. The temperature-sensing element 46 of Fig. 14 has the same efficiency as the preceding embodiments.

Fig. 15 indicates the cross section of a temperature-sensing element 46 acording to an eleventh embodiment of this invention, which comprises a band-shaped magnetic material 48, insulation layer 56 coated thereon, conductor 52 wound about the insulation layer 56 and shielding member 58 wound about the coiled conductor 52 and acting as an electrical insulation layer. The temperature-sensing element 46 is reliably insulated from the other cables and is also little affected by noise.

Fig. 16 shows the cross section of a temperature-sensing element 46 according to a twelfth embodiment by this invention. With this twelfth embodiment, a conductive core 60 is surrounded by an insulation layer 56 in a state insulated from a band-shaped magnetic material 48. Where the band-shaped amorphous magnetic material 48 has a relatively high resistance, then difficulties tend to be presented in processing a transmitted or reflected pulse signal. If in such case, a temperature-sensing element 46 constructed as shown in Fig. 16 is applied, then the conductive core 60 can be used as a pulse signal-transmitting circuit.

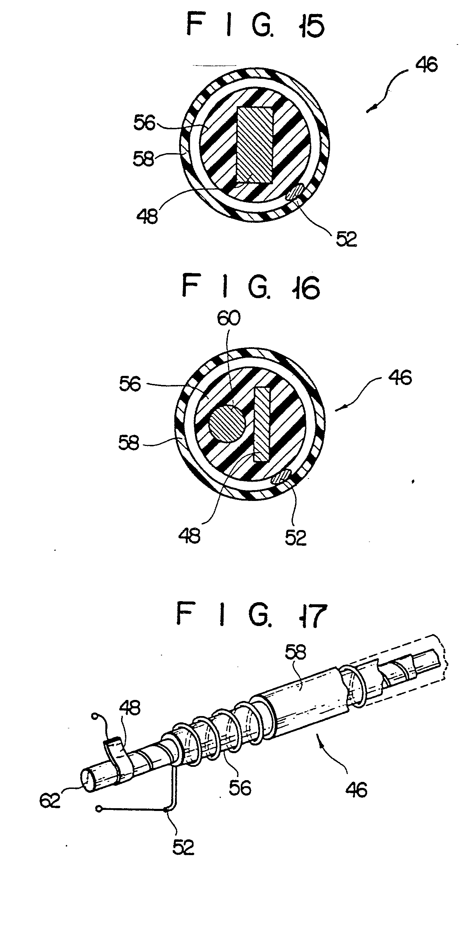

Fig. 17 illustrates a temperature-sensing element 46 according to a thirteenth embodiment of this invention, which comprises an insulation core member 62 prepared from, for example, synthetic resin, band-shaped amorphous magnetic material 48 wound about the core member 62, insulation layer 56 coated on the magnetic material 48, conductor 52 wound about the insulation layer 56 and shielding member 58 coated on the insulation layer 56 and acting as an electrical insulation layer. The band-shaped magnetic material 48 may be wound spatially or so closely as to cause every adjacent turns to be electrically contacted by each other. The band-shaped amorphous magnetic material 48 may be linearly mounted on one lateral side of the insulation core member 62.

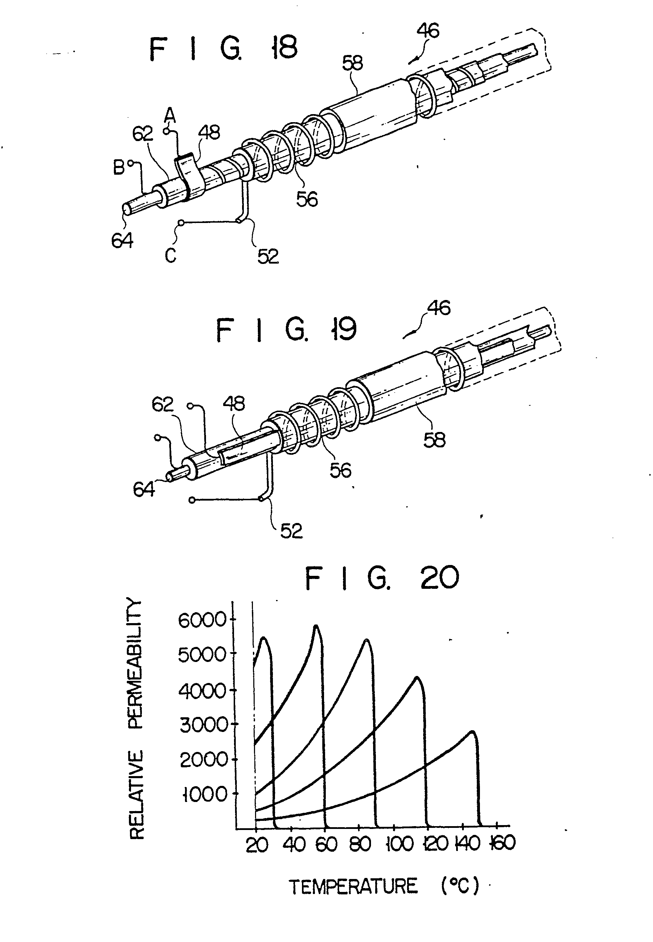

Fig. 18 indicates a temperature-sensing element 46 according to a fourteenth embodiment of this invention, which is constructed by inserting a conductive core 64 made of, for example, copper, into the core member 62 of Fig. 17 which is formed of insulation material. The core 64 acting as a reinforcement for the insulation core member 62 enables the band-shaped amorphous magnetic material 48 to be easily wound about the insulation core member 62. The temperature-sensing element 46 of Fig. 18 has the advantage that any two of the terminals A, B, and C can be respectively used as the input and output terminals of a pulse signal. For example, where the terminals B and C are used for the above-mentioned object, then it is possible to detect the local impedance variations of the amorphous magnetic material 48 through a considerably low circuit resistance.

Fig. 19 indicates a temperature-sensing element 46 according to a fifteenth embodiment of the invention, which comprises an insulation member 62 axially penetrated by a core 64, band-shaped magnetic material 48 linearly mounted on one lateral side of the insulation core member 62, insulation layer 56 coated on the core member 62 and band-shaped magnetic material 48, conductor 52 wound about the insulation layer 56 and shielding member 58 covering the wound conductor 52 and acting as an electrical insulation layer. The core 64 may be omitted.

The temperature-sensing element of this invention is not limited to the above-mentioned embodiments. For instance, the Curie temperature of the amorphous magnetic material may be properly defined in accordance with the range of a temperature to be detected. The process of winding the conductor, the turn pitch of the wound conductor or the length of the temperature-sensing element may be properly defined in accordance with the specification of a temperature variations-site detecting apparatus to be applied. Further, the temperature-sensing element may be constructed by providing a plurality of band-shaped magnetic materials.

A pulse signal-transmitting circuit formed of a band-shaped magnetic material and conductor jointly constituting a temperature-sensing element may be open at may be open at both ends. In this case, a pulse signal is supplied to one end of a conductor or band-shaped magnetic material, and the other end is grounded through an electric resistor.

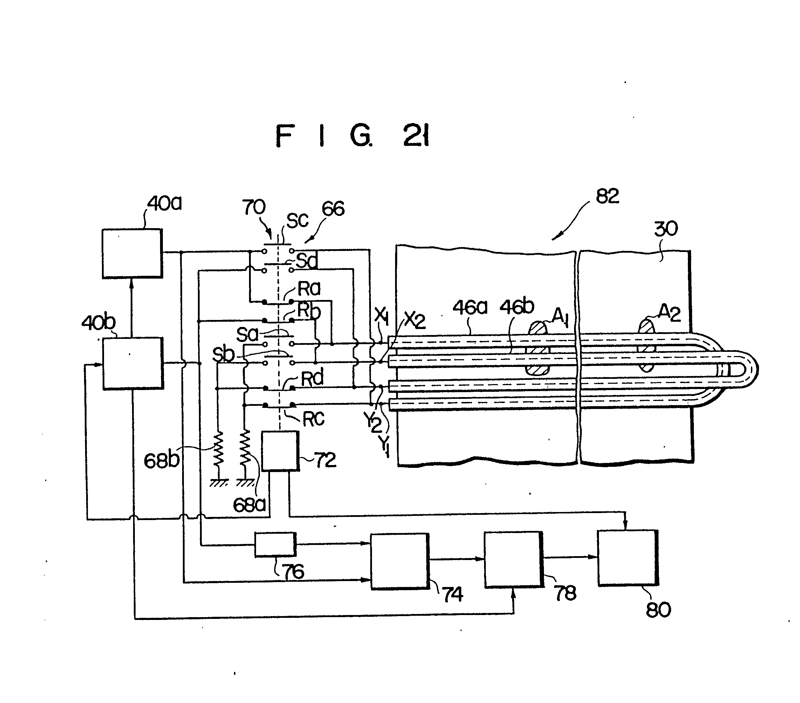

Description is now given with reference to Fig. 21 of a temperature variation-site detecting apparatus according to a different embodiment from those described above.

With some amorphous magnetic material or ferro-magnetic material, the relative permeability increases with temperature and sharply falls to 1 at the Curie temperature $T_C$ as seen from Fig. 20. The various portions of the temperature-sensing element using such magnetic material change in relative permeability with the temperature distribution of an object on which the temperature-sensing element is mounted, even when the temperature of the magnetic material is below its specific Curie temperature. Accordingly, the characteristic impedances of the various portions of the temperature sensing element change. When different characteristic impedances appear at the various portions of the temperature-sensing element, then pulse signals are reflected from the portions. Therefore, the temperature-sensing element is simultaneously supplied with pulse signals reflected from those portions of the temperature-sensing element which stand at a lower temperature than the Curie temperature, and pulse signals reflected from those portions of the temperature-sensing element which indicate a higher temperature than the Curie temperature.

If, in such case, a temperature variation-site detecting apparatus is applied which is arranged as shown in Fig. 21, then it is possible to substantially prevent pulse signals from being reflected from those portions of the temperature-sensing element which have a lower temperature than the Curie temperature corresponding to a predetermined temperature, thereby elevating the precision with which the temperature variations of an object can be sensed.

Referring to Fig. 21, a first wider U-shaped temperature-sensing element 46a and a second narrower U-shaped temperature-sensing element 46b which have about the same length, and are arranged in parallel in superposed relationship are closely mounted on an object 30 with the narrower temperature-sensing element 46b set inside the wider temperature-sensing element 46a, in such a manner that one arm of the wider U-shaped temperature-sensing element 46a is disposed close to the corresponding arm of the narrower U-shaped temperature-sensing element 46b.

The first and second temperature-sensing elements 46a, 46b may be of the same type as any of the previously described embodiments shown in Figs. 4 to 19. The first temperature-sensing element 46a is formed of a band-shaped magnetic material having a Curie temperature $T_{C1}$ substantially equal to the predetermined temperature $T_E$ of the object 30. The second temperature-sensing element 46b is formed of a band-shaped magnetic material having a Curie temperature $T_{C2}$, for example, about 10°C higher than the aforementioned Curie temperature $T_{C1}$.

The end $X_1$ of one arm of the first wider temperature-sensing element 46a and the end $Y_1$ of the other arm of the temperature-sensing element 46a are alternately connected by a switching device 66 to the output terminal of a first pulse generator 40a and a reflection preventing impedance element 68a. The end $X_2$ of an arm of the second narrower temperature-sensing element 46b and the end $Y_2$ of the other arm of the temperature-sensing element 46b are also alternately connected by the switching device 66 to the output terminal of a second pulse generator 40b and a reflection preventing impedance element 68b.

The switching device 66 comprises a switching contact section 70 and control section 72 for intermittently actuating the switching contact section 70. The switching contact section 70 comprises, for example, four normally closed contact units Ra, Rb, Rc, Rd, and four normally open contact units Sa, Sb, Sc, Sd. There contact units Ra, Rb, Rc, Rd and Sa, Sb, Sc, Sd are connected in the following manner to the end $X_1$ of one arm of the first wider temperature-sensing element 46a and the end $X_2$ of one arm of the second narrower temperature-sensing element 46b, the end $Y_1$ of the other arm of the first wider temperature-sensing element 46a, and the end $Y_2$ of the other arm of the second narrower temperature-sensing element 46b, first and second pulse generators 40a, 40b, and impedance elements 68a, 68b. Namely, the end $X_1$ of one arm of the first temperature-sensing element 46a is connected to the first contact element of the normally closed contact unit Ra. The second contact element of the normally closed contact unit Ra is connected to the output terminal of the first pulse generator 40a. The end $X_1$ of one arm of the first temperature-sensing element 46a is connected to the first contact element of the normally open contact unit Sa. The second contact element of the normally open contact unit Sa is grounded through the impedance element 68a. The end $Y_1$ of the other arm of the first temperature-sensing element 46a is connected to the first contact element of the normally open contact unit Sc. The second contact element of the normally open contact unit Sc is connected to the output terminal of the first pulse generator 40a. The end $Y_1$ of the other arm of the first temperature-sensing element 46a is connected to the first contact element of the normally closed contact unit Rc. The second contact element of the normally closed contact unit Rc is grounded through the impedance element 68a. The end $X_2$ of the arm of the second temperature-sensing element 46b is connected to the first contact element of the normally closed contact unit Rb. The second contact element of the normally closed contact unit Rb is connected to the output terminal of the pulse generator 40b. The end $X_2$ of one arm of the second temperature-sensing element 46b is connected to the first contact element of the normally open contact unit Sb. The second contact element of the normally open contact unit Sb is grounded through the impedance element 68b. The end $Y_2$ of the other arm of the second temperature-sensing element 46b is connected to the first contact element of the normally open contact unit Sd. The second contact element of the normally open contact unit Sd is connected to the output terminal of the second pulse generator 40d. The end $Y_2$ of the other arm of the second temperature-sensing element 46b is connected to the first contact element of the normally closed contact unit Rd. The second contact element of the normally closed contact unit Rd is grounded through the impedance element 68b.

Each time the control section 72 of the switching device 66 has its operation mode changed over, the first and second pulse generators 40a, 40b simultaneously send forth a pulse signal after a prescribed length of time has passed from the point of time at which the operation mode of the control section 72 has been changed over. The output terminal of the first pulse generator 40a is connected to one of the input terminals of a differential amplifier 74. The output terminal of the second pulse generator 40b is connected to the input terminal of an amplifier 76, whose output terminal is connected to the other input terminal of the differential amplifier 74.

An output pulse from the second pulse generator 40b and an output pulse from the differential amplifier 74 are supplied to a pulse time difference detector 78, an output signal from which is delivered to a temperature variation site detector 80. This temperature variation site detector 80 has the fundamentally same arrangement as the conventional type. This temperature variation site detector 80 is supplied with a signal denoting the operation mode of the control section 72 in order to judge which of the terminals $X_1$, $X_2$ of the first and second temperature-sensing elements 46a, 46b or which of the terminals $Y_1$, $Y_2$ thereof has received a pulse signal. The temperature variation site detector 80 figures out the site on an object which has an abnormal temperature from the above-mentioned judgement.

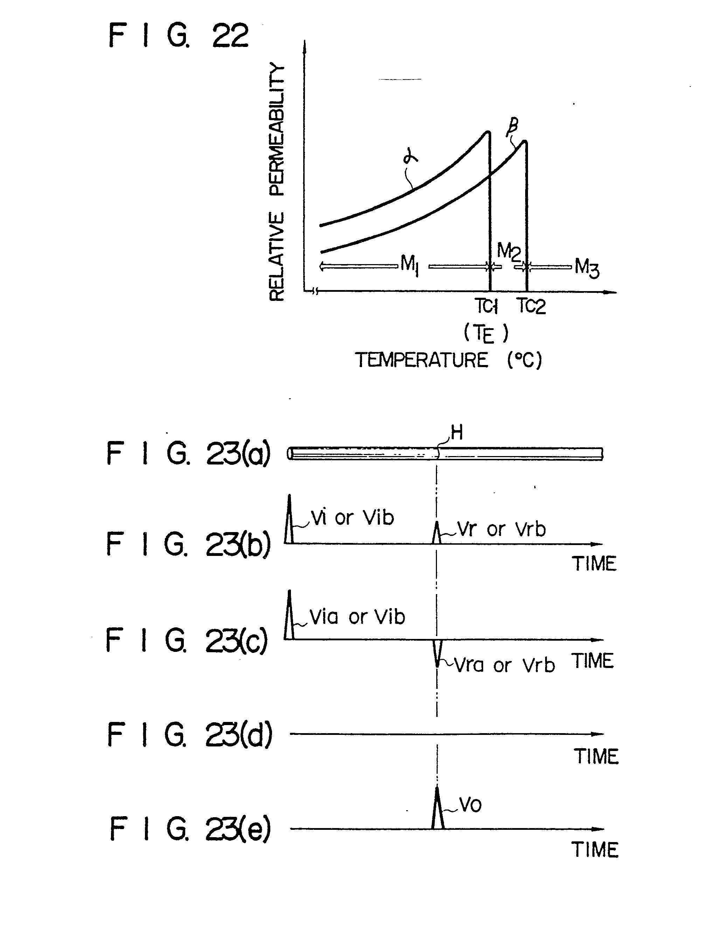

Now the following assumption is made that a temperature variation site detecting apparatus 82 is in the condition shown in Fig. 21; a magnetic material constituting the first temperature-sensing element 46a has a temperature-relative permeability characteristic represented by curve α of Fig. 22; the Curie temperature $T_{C1}$ of the magnetic material is substantially equal to a predetermined temperature $T_E$; a magnetic material constituting the second temperature-sensing element 46b has a temperature-relative permeability characteristic denoted by curve β of Fig. 22; and the Curie temperature $T_{C2}$ of the magnetic material of the second temperature-sensing element 46b is higher than the Curie temperature $T_{C1}$ of the magnetic material of the first temperature-sensing element 46a.

Then pulses reflected from the three temperature regions $M_1$, $M_2$, $M_3$ of Fig. 22 are sent forth from the differential amplifier 74 at the undermentioned mode.

(1) Temperature region $M_1$

In this temperature region, the above-mentioned two kinds of magnetic material stand at a lower temperature than the predetermined level $T_E$. To simplify discussion, let it be assumed that the right side of a temperature-sensing element as viewed from point H of Fig. 23(a) has a higher temperature and the left side of the temperature-sensing element as viewed from the point H has a lower temperature. In this case, pulse signals emitted from the first and second pulse generators 40a, 40b are reflected from the point H of the temperature-sensing element. Now let it be assumed that $Z_0$ represents the characteristic impedance of the left side of the temperature-sensing element as viewed from point H; $Z_1$ denotes the characteristic impedance of the right side of the temperature-sensing element as viewed from point H; and $V_i$ shows the voltage of an input pulse signal. Then a pulse signal reflected from point H has a voltage $V_r$ expressed by the following equation:

$$V_r = \frac{Z_1 - Z_0}{Z_1 + Z_0} V_i \qquad (1)$$

As seen from Fig. 22, $Z_1 > Z_0$ results in the temperature region $M_1$. As shown in Fig. 23(b), therefore, the reflected pulse signal $V_r$ is reflected

with the same phase as the input pulse signal $V_i$. Since the first and second temperature-sensing elements 46a, 46b are closely disposed in parallel, a pulse signal is reflected from substantially the same points on the temperature-sensing element 46a, 46b. If the amplifier 76 (Fig. 21) is chosen to have an optimum gain, then the input terminals of the differential amplifier 74 are supplied with two reflected pulse signals having the same phase and voltage level. Consequently as shown in Fig. 23(d), the differential amplifier 74 sends forth no output signal. Even where the characteristic impedance of the various sections of the temperature-sensing elements 40a, 40b changes discontinuously, the pulse time difference detector 78 is supplied in the temperature region $M_1$ with a signal completely freed of pulse signals reflected from those sections of the temperature-sensing elements 40a, 40b where the characteristic impedance changes discontinuously.

(2)  Temperature region $M_2$

In this temperature region $M_2$, the relative permeability of a magnetic material constituting the first temperature-sensing element 46a stands at 1. The relative permeability of a magnetic material constituting the second temperature-sensing element 46b still has a high level. Now let it be assumed that the right side of the first temperature-sensing element 46a as viewed from point H shown in Fig. 23(a) represents the temperature egion $M_2$ and the left side of the first temperature-sensing element 46a as viewed from point H denotes the temperature region $M_1$. Then, the characteristic impedance $Z_{1a}$ of the right side of the first temperature-sensing element 46a is lower than the characteristic impedance $Z_{0a}$ of the left side thereof ($Z_{1a} < Z_{0a}$). Therefore, it is obvious from the equation (1) that a pulse signal $V_{ra}$ reflected from point H has the opposite phase to an input pulse signal $V_{ia}$ as shown in Fig. 23(c). The characteristic impedance $Z_{1b}$ of the right side of the second temperature-sensing element 46b as viewed from point H is higher than the characteristic impedance $Z_{0b}$ of the left side thereof as viewed from point H ($Z_{1b} > Z_{0b}$). Therefore, a pulse signal $V_{rb}$ reflected from point H of the second temperature-sensing element 46b has the same phase as the input pulse signal $V_{ib}$ as shown in Fig. 23(b). In the temperature region $M_2$, therefore, the differential amplifier 74 sends forth an output pulse signal $V_0$ having a higher voltage level than a sum of an absolute value of the voltage of the pulse signal $V_{ra}$ reflected from the first temperature-sensing element 46a and an absolute value of the voltage of the pulse signal $V_{rb}$ reflected from the second temperature-sensing element 46(b) as shown in Fig. 23(e).

(3)  Temperature region $M_3$

In this temperature region $M_3$, the magnetic materials constituting the first and second temperature-sensing elements 46a, 46b have a relative permeability of 1 alike. Since the pulse signals $V_{ra}$, $V_{rb}$ reflected from the point H respectively have the opposite phase to the corresponding input signals as shown in Fig. 23(c), the differential amplifier 74 produces no output signal as shown in Fig. 23(d).

As described above, the differential amplifier 74 sends forth an output pulse signal $V_0$ coresponding to a reflected pulse signal only in the temperature region $M_2$. This output pulse signal $V_0$ is supplied to the pulse time difference detector 78, which detects a difference between a point of time at which a pulse signal is received from the first pulse generator 40a and a point of time at which the output pulse signal $V_0$ from the differential amplifier 74 is received. A signal denoting the detected time difference is supplied to the temperature variation site detector 80, which in turn figures out the position of the first temperature-sensing element 46a whose temperature has increased over the predetermined temperature $T_E$ ($\simeq$ the Curie temperature $T_{C1}$). Even where, therefore, the relative permeability of a band-shaped magnetic material as against temperature varies in a temperature region lower than the Curie temperature and consequently the various sections of a temperature-sensing element indicate different characteristic impedances, it is possible to unfailingly detect the site at which such abnormal temperature as requires detection occurs.

Where the switching contact section 70 of the switching device 66 has its condition reversed from that shown in Fig. 21, then first and second pulse signals from the first and second pulse generators 40a, 40b are supplied to the ends $Y_1$, $Y_2$ of the other arms of the U-shaped temperature-sensing elements 46a, 46b. As a result, a site of abnormal temperature is detected with the other end $Y_1$ of the first temperature-sensing element 46a taken as a reference. Where the terminals of the first and second temperature-sensing elements 46a, 46b which are to be supplied with a pulse signal are alternately changed over by the switching device 66, then, for example, two sites $A_1$, $A_2$ (Fig. 21) of abnormal temperature can be accurately detected, then broadening the latitude where a temperature variation site-sensing element can be applied. The impedance elements 68a, 68b of Fig. 21 are not always necessary, but may be omitted.

Where the magnetic materials of the first and second temperature-sensing elements 46a, 46b has no different Curie temperature, but same temperature-relative permeability characteristics, the amplifier 76 may be omitted.

Where the amplifier 76 is not used, it is possible to compensate an output pulse from the differential amplifier 74 which results from such a difference between the temperature-relative permeability characteristics of two kinds of magnetic material as is indicated in the temperature region $M_1$ by supplying the output pulse to a slice circuit.

**Claims**

1. An apparatus for detecting local temperature variation of an object and the site of the tmperature variation, comprising:

— a temperature-sensing member (46) including an elongate conductor (52) constituting a signal transmission circuit and an elongate magnetic element (48) having a prescribed Curie temperature corresponding to the lower limit of an anticipated abnormal temperature range;

— a pulse generator 40 for supplying a pulse signal to one end of said temperature-sensing member (46);

— a pulse time difference detector (42) for detecting a time difference between a point of time at which the pulse signal from said pulse generator (40) is received at said one end of said temperature-sensing member (46) and a point of time at which the pulse signal reflected from a site of said temperature-sensing member (46) where the characteristic impedance of said temperature-sensing member (46) has changed due to an increase in temperature above the Curie temperature is received at said one end of said temperature-sensing member (46);

— a temperature variation site detector (44) responsive to said time difference detector (42) for detecting the site of the impedance change from the detected time difference, and

— insulating means (56, 62) for insulating said elongate conductor (52) and said elongate magnetic element (48),

characterized in that

— said magnetic element (48) is formed of a band-shaped amorphous magnetic alloy mainly consisting of a ferromagnetic transition metal.

2. An apparatus according to claim 1, characterized in that said insulating means (56, 62) comprise an elongate insulating body in which said magnetic body (48) is disposed and on which in a manner known per se said conductor (52) is disposed.

3. An apparatus according to claim 1, characterized in that said insulating means (56, 62) comprise an elongate insulating body in which said magnetic element (48) and said conductor (52) are insulated from one another.

4. An apparatus according to claim 1, characterized in that said insulating means comprise an elongate insulating body (56) and an elongate insulating core (62) which is disposed in said insulating body (56), and that said amorphous magnetic alloy element (48) is wound about said insulating core (62).

5. An apparatus according to claim 1, characterized in that said insulating means comprise an elongate insulating body (56) and an elongate insulating core (62) which is disposed in said insulating body (56), and that said amorphous magnetic alloy element (48) is disposed on said insulating core to extend along said insulating core (62).

6. An apparatus according to claim 4 or 5, characterized in that further elongate conductor (64) is disposed in said insulating core (62).

7. An apparatus according to any of the preceding claims, characterized in that a shielding member (58) is provided for electro-magnetically shielding said temperature-sensing member (46).

**Patentansprüche**

1. Apparat zum Detektieren örtlicher Temperaturvariationen eines Objekts und der Stellen der Temperaturvariation, umfassend:

— ein Temperaturmeßelement (46) mit einem einen Signalübertragungskreis bildenden, langgestreckten Leiter (52) und einem langgestreckten Magnetelement (48) einer vorgeschriebenen Curie-Temperatur entsprechend dem unteren Grenzwert eines vorausgesetzten abnormalen Temperaturbereichs,

— einen Impulsgenerator (40) zur Lieferung eines Impulssignals zum einen Ende des Temperaturmeßelements, (46),

— einen Impulszeitdifferenzdetektor (42) zum Erfassen (Detektieren) einer Zeitdifferenz zwischen einem Zeitpunkt, zu dem das Impulssignal vom Impulsgenerator (40) am genannten einen Ende des Temperaturmeßelements (46) empfangen wird, und einem Zeitpunkt, zu dem das Impulssignal, das von einer Stelle des Temperaturmeßelements (46), an welcher sich die charakteristiche Impedanz des Temperaturmeßelements (46) aufgrund eines Temperaturanstiegs über die Curie-Temperatur verändert hat, reflektiert worden ist, am genannten einen Ende des Temperaturmeßelements (46) empfangen wird,

— einen auf den Zeitdifferenzdetektor (42) ansprechenden Temperaturänderungsstellendetektor (44) zum Erfassen der Stelle oder des Orts der Impedanzänderung anhand der erfaßten Zeitdifferenz und

— Isoliermittel (56, 62) zum Isolieren des langgestreckten Leiters (52) und des langgestreckten Magnetelements (48),

dadurch gekennzeichnet, daß

— das Magnetelement (48) aus einer hauptsächlich aus einem ferromagnetischen Übergangsmetall bestehenden bandförmigen, amorphen magnetischen Legierung geformt ist.

2. Apparat nach Anspruch 1, dadurch gekennzeichnet, daß die Isoliermittel (56, 62) einen langgestreckten Isolierkörper umfassen, in welchem das Magnetelement (48) angeordnet und auf welchem der Leiter (52) in an sich bekannter Weise angebracht ist.

3. Apparat nach Anspruch 1, dadurch gekennzeichnet, daß die Isoliermittel (56, 62) einen langgestreckten Isolierkörper umfassen, in welchem das Magnetelement (48) und der Leiter (52) gegeneinander isoliert sind.

4. Apparat nach Anspruch 1, dadurch gekennzeichnet, daß die Isoliermittel einen langgestreckten Isolierkörper (56) und einen langgestreckten, im Isolierkörper (56) angeordneten Isolierkern (62) umfassen und daß das Element (48) aus der amorphen magnetischen Legierung um den Isolierkern (62) herumgewickelt ist.

5. Apparat nach Anspruch 1, dadurch gekennzeichnet, daß die Isoliermittel einen langgestreckten Isolierkörper (56) und einen langgestreckten, im Isolierkörper (56) angeordneten Isolierkern (62) umfassen und daß das Element (48) aus der amorphen magnetischen Legierung sich längs des Isolierkerns (62) erstreckend auf dem Isolierkern angeordnet ist.

6. Apparat nach Anspruch 4 oder 5, dadurch gekennzeichnet, daß im Isolierkern (62) ein weiterer langgestreckter Leiter (64) angeordnet ist.

7. Apparat nach einem der vorangehenden Ansprüche, dadurch gekennzeichnet, daß ein Abschirmelement (58) zum elektromagnetischen Abschirmen des Temperaturmeßelements (46) vorgesehen ist.

**Revendications**

1. Appareil pour détecter une variation locale de température d'un objet et l'endroit de la variation de température, comprenant:
— un organe de détection de température (46) incluant un conducteur allongé (52) constituant un circuit de transmission de signaux et un élément magnétique allongé (48) qui a une température de Curie prescrite correspondant à la limite inférieure d'un intervalle de températures anormales prévues;
— un générateur d'impulsions (40) pour fournir un signal pulsé à une extrémité de l'organe de température (46);
— un détecteur de différence de temps d'impulsion (42) pour détecter une différence de temps entre un point du temps où le signal pulsé provenant du générateur d'impulsions (40) est reçu à ladite entrémité de l'organe de détection de température (46) et un point du temps où le signal pulsé, réfléchi par un endroit de l'organe de détection de température (46) où l'impédance caractéristique de l'organe de détection de température (46) a varié en raison d'une augmentation de température au-dessus de la température de Curie, est reçu à l'extrémité de l'organe de détection de température (46);
— un détecteur d'endroit de variation de température (44) sensible au détecteur de différence de temps (42) pour détecter l'endroit de la variation d'impédance à partir de la différence de temps détectée; et
— des moyens isolants (56, 62) pour isoler le conducteur allongé (52) et l'élément magnétique allongée (48),
caractérisé en ce que:
— l'élément magnétique (48) est constitué d'un alliage magnétique amorphe en forme de bande principalement constitué d'un métal de transition ferromagnétique.

2. Appareil selon la revendication 1, caractérisé en ce que les moyens isolants (56, 62) comprennent un corps isolant allongé dans lequel le corps magnétique (48) est placé et sur lequel le conducteur (52) est placé d'une manière connue en soi.

3. Appareil selon la revendication 1, caractérisé en ce que les moyens isolants (56, 62) comprennent un corps isolant allongé dans lequel sont isolés entre eux l'élément magnétique (48) et le conducteur (52).

4. Appareil selon la revendication 1, caractérisé en ce que les moyens isolants comprennent un corps isolant allongé (56) et un noyau isolant allongé (62) qui est placé dans le corps isolant (56), et en ce que l'élément en alliage magnétique amorphe (48) est enroulé autour du noyau isolant (62).

5. Appareil selon la revendication 1, caractérisé en ce que les moyens isolants comprennent un corps isolant allongé (56) et un noyau isolant allongé (62) qui est placé dans le corps isolant (56), et en ce que l'élément en alliage magnétique amorphe (48) est placé sur le noyau isolant pour qu'il s'étende le long du noyau isolant (62).

6. Appareil selon l'une quelconque des revendications 4 et 5, caractérisé en ce qu'un autre conducteur allongé (64) est placé dans le noyau isolant (62).

7. Appareil selon l'une quelconque des revendications 1 à 6, caractérisé en ce qu'un organe de protection (58) est prévu pour protéger électromagnétiquement l'organe de détection de température (46).

0 044 431

# F I G. 1

# F I G. 2

# F I G. 3(a)

$$T_0 = \frac{2\ell}{V}$$

1

# F I G. 3(b)

# F I G. 4

# F I G. 5

# F I G. 6

50

48

46

52

# F I G. 7

50

48

46

52

# F I G. 8

49

50

48

46

52

# FIG 9

55

50

52

48

46

# FIG. 10

48

46

52

# FIG. 11

46

48

52

# F I G. 12

# F I G. 13

# F I G. 14

# F I G. 15

# F I G. 16

# F I G. 17

F I G. 18

F I G. 19

F I G. 20

RELATIVE PERMEABILITY

6000
5000
4000
3000
2000
1000

20  40  60  80  100  120  140  160

TEMPERATURE  (°C)

# F I G. 21

# F I G. 22

# F I G. 23(a)

# F I G. 23(b)

# F I G. 23(c)

# F I G. 23(d)

# F I G. 23(e)